# EUROPEAN PATENT APPLICATION

(11) **EP 1 684 213 A1**
(43) Date of publication of application: **26.07.2006**
(21) Application number: 05000903.4
(22) Date of filing: 18.01.2005
(51) Int. Cl.: G06K 19/04, B42D 15/10, G09F 3/02

(54) **Method for forming transaction card assemblies**

(71) Applicant: Arthur Blank & Company, Inc., Boston, MA 02132 (US)
(72) Inventor: Blank, Eric, Boston Massachusetts 02115 (US)
(74) Representative: HOFFMANN EITLE

(57) **Abstract**

A transaction card assembly and method for forming a transaction card assembly. The transaction card assembly may include a transaction card (10) and an auxiliary member (20) connected to the transaction card. The transaction card and the auxiliary member may be formed from a same piece of material and have a line of weakness (2) that allows the transaction card (10) and auxiliary member (20) to be separated without the use of tools. The transaction card (10) and/or the auxiliary member (20) may meet ISO specifications after separation.

## Description

This invention relates to methods for forming transaction card assemblies.

Transaction cards, such as credit and debit cards, gift cards, membership cards, promotional cards, e.g., frequent flyer cards, identification cards and the like, are widely used. Such transaction cards may include a variety of different indicia to identify the card, the individual using the card, a transaction account, such as a credit card or gift card account, or other features. The indicia may include a string of alphanumeric characters, a barcode, an encoded magnetic strip attached to the card, an RFID device or an electronic chip.

Transaction card assemblies have been produced that include an auxiliary portion, e.g., having an advertising section, keytag or other member, connected to a card portion. For example, U.S. Patent 6,588,658 discloses transaction card assemblies in which a transaction card portion may be separated from an auxiliary portion without the use of tools. The transaction card may meet International Standards Organization (ISO) standards for transaction cards; including standards for edge roughness, after separation from the auxiliary member.

In one embodiment of the invention, a method for forming a transaction card assembly includes providing a sheet material having first and second planar surfaces. A portion of the sheet material is simultaneously scored on both of the first and second planar surfaces to form a score line. A transaction card assembly is cut from the sheet material so that the transaction card assembly includes first and second portions that are separable from each other by hand and without the use of tools at the score line by moving the first portion relative to the second portion. In one embodiment, the score line may be formed so that the first and/or second portion meets ISO specifications for edge roughness for transaction cards after being separated from each other.

In one aspect of the invention, both of the first and second planar surfaces are simultaneously scored at locations directly opposite each other so that the score line is formed by two score marks opposite each other. Cutting of the transaction card assembly may be done by aligning a cutting die appropriately with respect to the sheet material and a location of the score line. This alignment may cut the transaction card assembly so that the first portion forms a transaction card of a desired size bounded by at least one cut side of the first portion and a location where the score line is formed. For example, the transaction card may have a CR-80 format and meet ISO specifications for a CR-80 card when separated from the second portion of the sheet material at the score line. The second portion of the transaction card assembly may include one or more transaction cards, coupon portions, advertising portions, and/or keytags.

The first and/or second portions may include one or more machine readable features, such as one or more magnetic strips, barcodes, electronic chips, RFID devices, and/or printed alphanumeric strings. The machine readable feature may include indicia that uniquely identifies the first or second portion from other transaction card assemblies in a plurality of transaction card assemblies provided for an issuer. Thus, the use of each individual first or second portion may be identified from other first or second portions in other transaction card assemblies.

The first and/or second portions may include a removable label, such as a removable, reusable label, a scratch-off label, or a removable, non-reusable label. The label may include indicia that matches indicia on the first or second portion, such as information encoded in a magnetic strip, barcode, electronic chip, etc.

These and other aspects of the invention will be apparent and/or obvious from the following detailed description.

Illustrative embodiments of the invention are described below with reference to the following drawings, in which like numerals reference like elements, and wherein:
Fig. 1 is a first side of a transaction card assembly in accordance with an embodiment of the invention;
Fig. 2 is a second side of the transaction card assembly of Fig. 1;
Fig. 3 shows a schematic representation of a method for forming transaction card assemblies in accordance with the invention;
Fig. 4 shows a perspective view of a die used to form transaction card assemblies in one embodiment;
Fig. 5 shows a top view of a portion of the Fig. 4 die;
Fig. 6 shows a cross-sectional view along the line 6-6 in Fig. 5;
Fig. 7 shows a first side of a transaction card assembly in accordance with another embodiment of the invention; and
Fig. 8 is a second side of the transaction card assembly of Fig. 7.

Transaction cards are widely used for a variety of different purposes, such as for credit and debit account purchases, tracking member activity (e.g., tracking frequent flyer activity), for gift-certificate purchases, and so on. Vendors issuing transaction cards for tracking member activity typically wish to ensure that users of a membership account receive transaction cards, keytags or other devices that are appropriately associated with the membership account. Vendors may also wish to provide advertising or other promotional information with a transaction card, e.g., to defer some of the cost of issuing the transaction card by having others pay for advertising included with the transaction card. As one example, a vendor may wish to issue a gift card or prepaid telephone card that entitles the bearer to a specified amount of purchase or telephone use credit. Advertising may be provided with the transaction card on a portion connected to the card to promote the vendor's products or other goods or services.

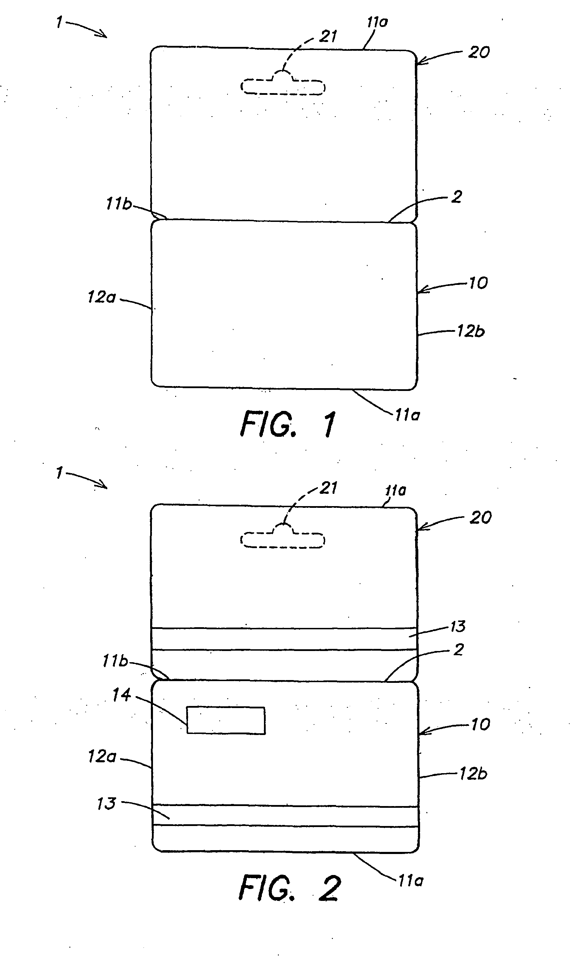

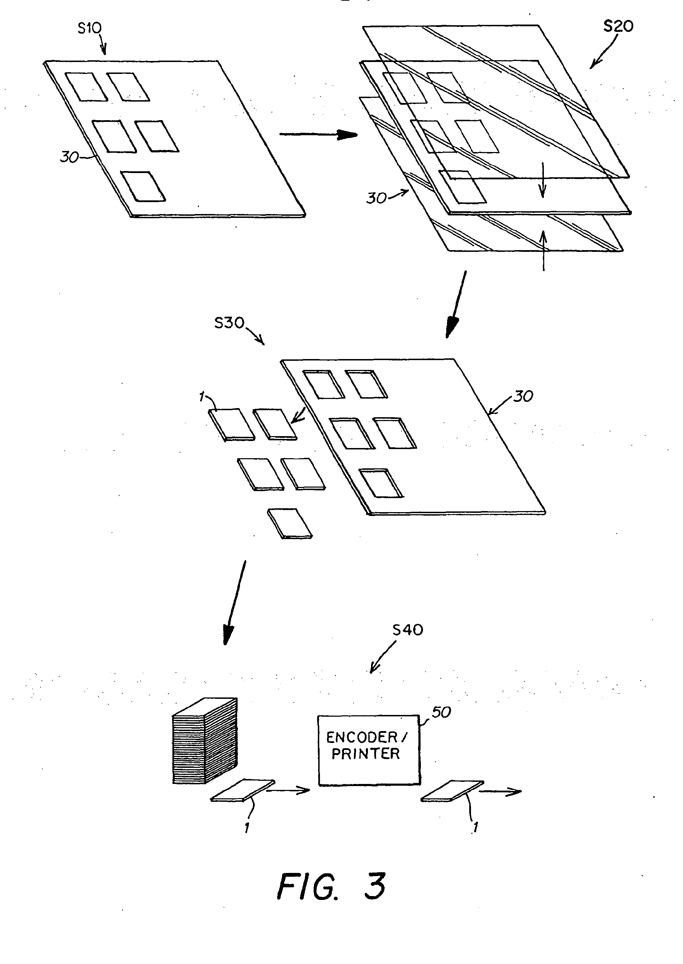

Figs. 1 and 2 show first and second sides, respectively, of a transaction card assembly formed in accordance with an embodiment of the invention. It should be understood that Figs. 1 and 2 show only one illustrative embodiment of the invention and should not be used to narrowly interpret the scope of the invention. In addition, various aspects of the invention are described with reference to different embodiments. It should be understood that these various aspects may be used in any suitable combination with each other. Therefore, the illustrative embodiments described below are intended to be illustrative, not limiting.

The transaction card assembly 1 shown in Fig. 1 includes a first portion (a transaction card) 10 and a second portion (an auxiliary member) 20 connected to the first portion 10. (Names for the first and second portions are provided to aid in understanding, but should not be construed to limit the function(s) or other arrangement of the first and/or second portions 10,20.) The transaction card 10 may be used, for example, as a credit or debit card, a membership identification card, an account identification card, a gift card, a prepaid telephone card, and so on. The auxiliary member 20 may also be used as a transaction card, but may be used for other purposes and include any printed or otherwise presented material, such as advertising, handwritten information, a coupon or other purchase rebate information, a keytag, and so on.

The transaction card 10 and the auxiliary member 20 may be formed of any suitable material, such as a plastic or paper sheet material or laminates. If the transaction card 10 is intended to meet ISO specifications, at least the transaction card 10 may be made from a sheet of suitable material, e.g., poly vinyl chloride (PVC) or other material (e.g., PET, PETG, ABS or other plastic and/or synthetic materials) having a thickness of 0.030 inches ± ten percent. However, ISO specifications for transaction cards typically change over time, and therefore the transaction card 10 may be made of any suitable material, have any suitable dimensions or have any other feature to meet with desired ISO specifications for transaction cards, such as cards in a CR-80 format.

The auxiliary member 20 may be connected to the transaction card 10 along a long edge 11 of the transaction card 10. For example, the transaction card 10 and the auxiliary member 20 may be stamped or die cut from a same sheet of plastic material, and a line of weakness 2 may be formed between the transaction card 10 and the auxiliary member 20. In one preferred embodiment, the line of weakness 2 is formed by scoring on both sides of the assembly 1 to form a score line at the desired break point between the transaction card 10 and the auxiliary member 20. For an embodiment formed from a PVC sheet about 0.030 inches thick and having a transparent overlaminate film on both sides of the sheet, the score lines may each be about 0.010 inches deep and about 0.005 inches wide.

With this line of weakness 2, the transaction card 10 and the auxiliary member 20 may be separated from each other by folding the auxiliary member 20 toward the transaction card 10 along the line of weakness 2. The line of weakness 2 may be formed to allow separation of the auxiliary member 20 from the transaction card 10 so that at least the edge of the transaction card 10 where the auxiliary member 20 was connected is smooth after separation, e.g., sufficiently smooth to meet ISO specifications for edge roughness in transaction cards. Thus, scoring on both sides of the sheet as shown in Figs. 1 and 2 can allow for such a tool-free separation of the card 10 and member 20 while providing a ISO specification-compliant smooth edge on the entire periphery of card 10.

In the illustrative embodiment shown in Fig. 1, the auxiliary member 20 is connected to the transaction card 10 along a long edge 11b of the transaction card 10. If a transaction card 10 is formed to meet current ISO specifications for a CR-80 card, the transaction card 10 will have an approximately rectangular shape (2.125 inches by 3.375 inches). In this embodiment, the card 10 has a long edge 11a and two opposite short edges 12a and 12b defined by cut edges of the assembly 1, and the long edge 11b defined by the line of weakness 2. However, it should be understood that the auxiliary member 20 may be connected at any one of the edges 11a, 11b, 12a and 12b, or a combination of edges, such as edges 12a and 11b, if desired. Although the transaction card 10 and the auxiliary member 20 are shown in Fig. 1 as having an approximately rectangular shape, the transaction card 10 and/or the auxiliary member 20 may have any suitable shape, such as any polygon, circle, oval, and so on. Further, the auxiliary member 20 need not have the same shape or size as the transaction card 10, and may have several different, separable portions. Also, the line of weakness need not be arranged in a straight line. Instead, the line of weakness 2 may be curved or otherwise shaped in any suitable way, e.g., to conform to the shape of a product representation printed on the card 10 so that a portion of the card 10 has a shaped contour after separation from the member 20.

The transaction card 10 and/or the auxiliary member 20 may include any printed matter or otherwise display any suitable information, such as an advertisement, a credit card number, a message, an account number, a personal identification number (PIN) number, one or more labels adhered to the transaction card 10 or the auxiliary member 20 that include information or cover information on the transaction card 10 or the auxiliary member 20, and so on. The auxiliary member 20 may include a hole 21 used to hang or otherwise secure the transaction card assembly 1, the transaction card 10 and/or the auxiliary member 20 to a hook for display of the assembly, to an issuee's key chain, or to another support. The transaction card 10 and/or the auxiliary member 20 may also include other similar features, such as a clip, pin or other fastener. As one example, the auxiliary member 20 may be provided with a clip to attach the auxiliary member 20 to a garment.

Fig. 2 shows a second side of the transaction card assembly of Fig. 1. As with the first side of the transaction card assembly 1 shown in Fig. 1, the second side of the transaction card assembly 1 may include any suitable printed or otherwise displayed information. Thus, text or graphics information may be printed directly onto, physically stamped into, adhered to, or otherwise placed, e.g., by a label 14, on the transaction card 10 and/or the auxiliary member 20. The transaction card 10 or the auxiliary member 20 may also include one or more machine readable features either of the same type or of different types, e.g., two magnetic strips, a magnetic strip and a bar code, etc. Further, the machine readable features, like any other information on the transaction card 10 and/or the auxiliary member 20 may be placed on any suitable side or location of the card 10 or the auxiliary member 20.

In the example shown in Fig. 2, the transaction card 10 and the auxiliary member 20 include a machine readable feature in the form of a magnetic strip 13. The magnetic strips 13 are located on the back side of the assembly 1 (Fig. 2), but one or both of the strips 13 may be located on the front side of the assembly (Fig. 1). The magnetic strips 13 are also shown extending along the longer length of the card 10 and member 20, but may extend along the shorter dimension of the card and/or member 20 and/or in any other suitable direction. The magnetic strip 13 may be encoded with suitable information as is common with gift cards, credit cards, debit cards and automatic teller machine (ATM) cards. The magnetic strip 13 may be heat laminated to the transaction card 10, e.g., in a way to meet current or future ISO standards, or may be positioned on the transaction card in other ways. Use of a magnetic strip 13 that meets ISO specifications may be required for specific applications, such as credit card applications where the magnetic strip 13 may be repeatedly read over its lifetime. However, the magnetic strip 13 may be fixed to the transaction card 10 in a less robust way for less demanding applications, such as where the magnetic strip 13 may be read only once or twice over its lifetime.

The transaction card 10 and/or the auxiliary member 20 may include other machine readable features, such as barcodes or other passive devices. The transaction card 10 and/or the auxiliary member 20 may also include more active devices, such as semiconductor devices found in electronic cash cards like that described in U.S. Patent No. 5,971,282. Thus, the transaction card 10 and/or the auxiliary member 20 may include any suitable electronic device capable of providing identification information, receiving and processing information or performing other desired transaction functions. The machine readable features may be used to store, obtain, transmit or otherwise handle any type of information, such as text, biometrics information (such as eyescan or fingerprint information) and so on.

As discussed above, one or more labels 14 may be connected to the transaction card 10 and/or the auxiliary member 20. A label 14 may be connected so that the label 14 is removable and reusable, e.g., can be removed and adhered again to the transaction card 10 and/or the auxiliary member 20 or to another surface (such as a registration form), so that the label 14 is removable but cannot be reattached to any surface (such as when covering a PIN), or so that the label 14 is not removable (without damaging the label 14 - as in a scratch-off label). The label 14 may include any information, e.g., that is printed on the label 14, and/or the label 14 may obscure information on the transaction card 10 and/or the auxiliary member 20 from view. For example, the label 14 may obscure a PIN number on the transaction card 10 that is used to obtain prepaid telephone services and not be removable without detection. Thus, the account associated with the transaction card 10 may be activated, e.g., at the time of purchase, and the label 14 removed to reveal the PIN number to the purchaser. The label 14 may also include a machine readable feature.

Fig. 3 schematically depicts several steps in a method for forming transaction card assemblies in accordance with the invention. In step S10, a sheet of material 30, such as a sheet of PVC having a thickness of about 0.030 inches is printed with desired text, color fields, logos, graphics on one or both planar sides of the sheet 30. The printing may be done so as to form one or more transaction card assemblies, since the sheet may be large enough to make up to 72 or more transaction card assemblies. Also, the printing may be performed in multiple steps, e.g., one step for applying each of several different colors ultimately applied to the sheet. In addition, an adhesive layer or any other suitable arrangement may be provided to promote adhesion of the ink and/or other layers or items applied over the ink. For example, an adhesive may be provided on the core material under the ink, over the ink, as an adhesive film, as part of an overlaminate film, etc. The adhesive may be any suitable type, such as UV curable, solvent-based, etc. The sheet may also be provided with at least one machine readable feature for each transaction card assembly. For example, one or more electronic chips may be embedded in the sheet 30 (e.g., using a lamination process, etching, adhesive or other arrangement), or RFID communication antennas, magnetic strips, printed barcodes or other features may be provided for the sheet. In some cases, however, the machine readable features may be provided later in the manufacturing process.

In step S20, a transparent overlaminate film is applied to both planar sides of the sheet. This film application is optional, but may provide for better product appearance, e.g., by providing a glossy surface finish, and/or may make the transaction card assemblies more durable or wear resistant, e.g., by protecting the printed information, etc. from abrasion. In some cases, an overlaminate film may be required for ISO specification-compliant transaction cards, such as CR-80 cards.

In step S30, one or more transaction card assemblies 1 are cut from the sheet 30. The transaction card assemblies 1 may be cut from the sheet using a die cutting arrangement as is well known in the art. Formation of the score line(s) may be performed before or after cutting the assemblies from the sheet, but preferably the score line is formed at the same time that the assemblies are cut. This arrangement may allow for better registration of the score line(s) with the cut edges of the assembly. For example, in embodiments in which the transaction card 10 or other portions of the assembly must be made to have a certain size within a close tolerance, proper positioning of the score line relative to the cut edges of the assembly can help ensure that the transaction card 10 or other portions have the desired size. In addition, proper formation of the score line can enable the transaction card 10 and/or other portions of the assembly 1 to be separated from each other without tools so that the transaction card 10 or other portions have a sufficiently smooth edge at the score line portion so as to meet ISO specifications for edge roughness.

Whatever the timing of the formation of the score line (e.g., before, after or during cutting of the assemblies), in one aspect of the invention, the score line is formed by simultaneously scoring top and bottom planar surfaces of the sheet. The score line therefore may include two score marks that are directly opposed to each other on opposite sides of the sheet. The score marks may each be formed by scoring rules, e.g., raised linear portions on an otherwise flat die face, that are approximately 0.010 inches high and 0.005 inches wide. These rules may be forced into contact with the sheet 30 so as to form the score marks.

In step S40, the transaction card assemblies may be processed to include indicia, e.g., information that is encoded into a magnetic strip, printed in a barcode, programmed into an electronic chip, etc., by a suitable encoder, printer or other device 50. In one embodiment, stacks of assemblies 1 may be provided to a personalization apparatus that feeds assemblies along a conveyor, prints suitable indicia (e.g., in barcode or text form) on assemblies, encodes magnetic strips in the assemblies, and/or performs other operations to provide indicia on the assemblies and ensure that the indicia is correctly formed. Indicia may be formed in one or more suitable portions of the transaction card assemblies, and the indicia may uniquely identify each transaction card assembly from other transaction card assemblies manufactured in a large group, e.g., two or more cards.

Information for a plurality of transaction card assemblies 1, e.g., advertisements, text, graphics, holograms, bar codes, magnetic strips, embossed features, etc., may be printed, stamped or otherwise formed on one or both sides of the sheet 30 at any suitable point in the manufacturing process. Magnetic strips 13 may be formed, e.g., by a thermal lamination process, rolled onto the sheet, adhesive applied or formed as a full magnetic back, and optionally encoded with information for a plurality of transaction card assemblies 1 either before or after the assemblies 1 are cut from the sheet 30. Labels 14 for a plurality of transaction card assemblies 1 may be applied to the sheet and information printed the labels (if the information is not included on the labels before the labels are applied) at any suitable point in the manufacturing process.

It should be understood that the process steps described above may be performed in any suitable order, such as printing some or all information on the overlaminate film or core material, providing one or more machine readable features before or after applying an overlaminate film or cutting the transaction cards from the sheet, etc. In addition, some steps may be eliminated entirely, such as the step of applying an overlaminate film, or may be modified as suitable.

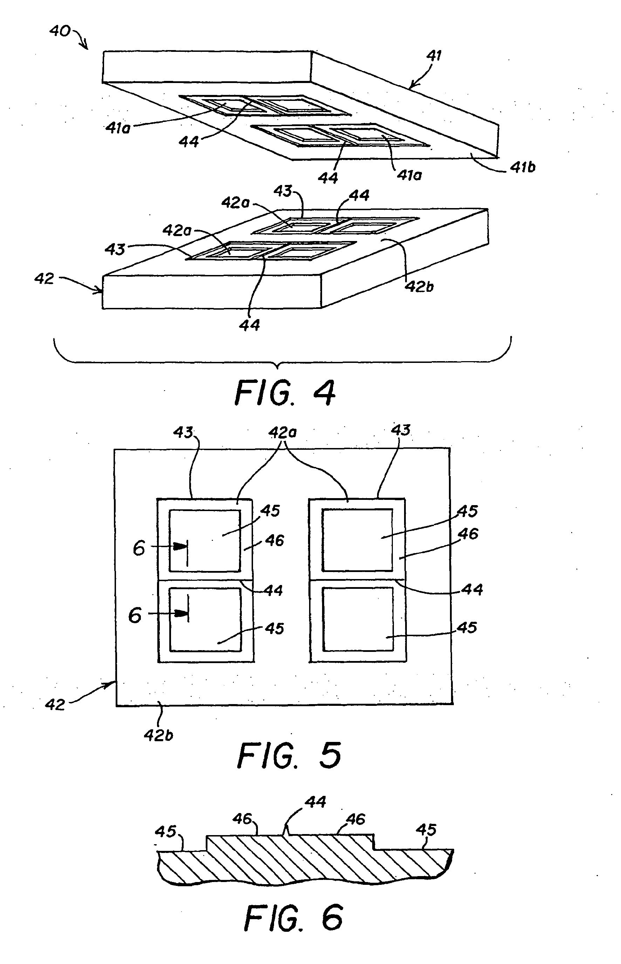

Fig. 4 shows a die arrangement for cutting transaction assemblies and forming a score line in accordance with the invention. In this embodiment, the die used to form the transaction card assemblies is a compound die, i.e., a die that both cuts the perimeter and forms the score line(s) for the transaction card assemblies in the same stroke. The die 40 has two separable portions: a top portion 41 and a bottom portion 42. The top and bottom portions 41 and 42 each have inner portions 41a and 42a and outer portions 41b and 42b. The inner portions 41a and 42a and outer portions 41b and 42b are movable relative to each other vertically so that when a sheet 30 is positioned between the top and bottom portions 41 and 42 and the sheet is clamped between the inner portions 41a and 42a, the inner portions 41a and 42a are moved relative to the outer portions 41b and 42b so that the sheet 30 is cut at the boundary 43 between the inner and outer portions. The inner portions 41a and 41b each also include one or more scoring rules 44 for forming score marks on the sheet when the sheet is squeezed between the inner portions 41 a and 42a, e.g., during a cutting operation. The scoring rules 44 may be positioned on the top and bottom portions 41 and 42 so that they are directly opposed during the cutting/scoring operation. As a result, the scoring rules 44 may form a score line having directly opposed score marks on opposite planar sides of the sheet 30. As mentioned above, when used with a sheet material about 0.030 inches thick, the scoring rules 44 may be about 0.010 inches high, about 0.005 inches wide, and as long as necessary to form a score line of a desired length. The scoring rules 44 may have an approximately triangular cross-sectional shape, i.e., in cross-section perpendicular to the length of the scoring rules 44, or other shape to form a suitable score mark. Of course, it will be understood that the score depth and/or width may be adjusted depending on the thickness of the sheet material, the presence (or non-presence) of an overlaminate film, or other factors.

The die 40 may be arranged in a press, with the top portion 41 movable in a vertical direction relative to the bottom portion 42, which may remain stationary. The sheet 30 may be positioned between the separated top and bottom portions 41, 42, which are then brought together to squeeze the sheet 30. This may mate the inner and outer portions of the die, with the sheet positioned between them and one or more spacers (not shown) preventing the inner and/or outer portions from placing too much pressure on the sheet 30. The inner portions 41a and 42a may then be moved vertically relative to the outer portions 41b and 42b so as to cut one or more assemblies from the sheet 30 in a shape defined by the shape of the boundary 43. This action may also form one or more score lines on the assemblies 1.

Fig. 5 shows a plan view of the bottom portion 42 of the die 40, and Fig. 6 shows a cross-sectional view along the line 6-6 shown in Fig. 5. In this embodiment, the inner portions 42a include recessed portions 45 surrounded by an assembly contact portion 46. The assembly contact portion 46 forms the cutting edge at the boundary 43 with the outer portion 42b where the sheet 30 is cut to form the assemblies 1. The recessed portions 45 generally do not contact the sheet 30 during operation of the die 40, and may reduce scratching or other marking of the sheet 30 that might occur, e.g., as the sheet 30 is fed between the upper and lower portions 41 and 42. The assembly contact portions 46 may be formed with a highly polished or otherwise suitable surface for contacting the sheet 30 so as to form a high quality cut edge at the boundary 43 and good surface finish on the formed assemblies 1. As shown in Fig. 6, the scoring rules 44 may extend above the assembly contact portion 46 and be directly opposed from each other so as to form suitable score marks in the assemblies 1.

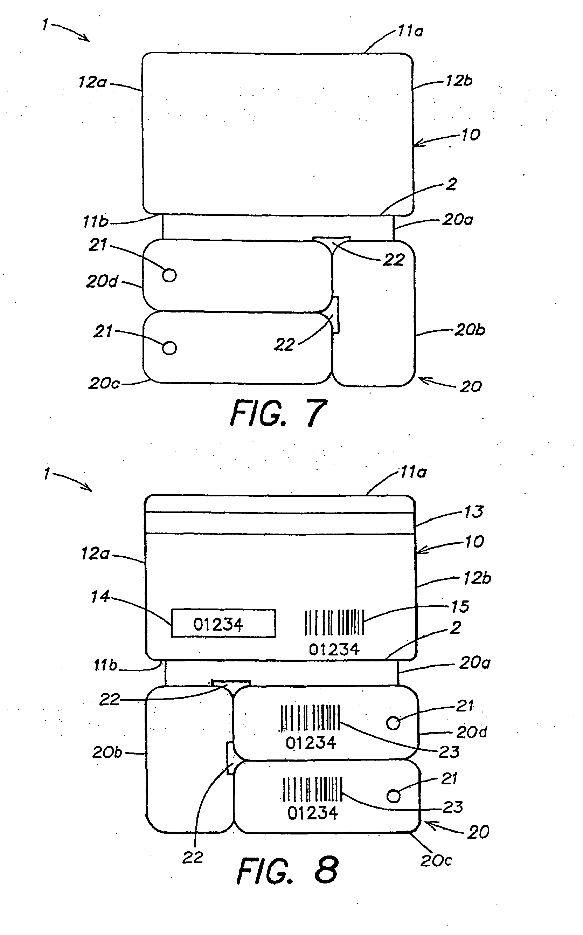

Figs. 7 and 8 show first and second sides, respectively, of another illustrative embodiment of a transaction card assembly 1. In this embodiment, an auxiliary member 20 includes four different sections that are connected to the transaction card 10. In this embodiment, the auxiliary member 20 includes an advertisement section 20a, a coupon section 20b, and two key tags 20c and 20d. Although functional names have been provided for each of the sections 20a-20d in this embodiment, these names have been used for ease of reference and understanding, but should not be construed as limiting the possible functions to be performed by or other features to be included in any of the sections 20a-20d. In addition, embodiments in accordance with the invention may include any number of sections connected to the transaction card 10.

In this embodiment, the transaction card 10 and the auxiliary member 20 are formed from a single sheet of material that is cut to define the outer periphery of the transaction card 10 and auxiliary member 20, as well as optional holes 21 in the key tags 20c and 20d and/or holes 22 that help define the shape of the key tags 20c and 20d. The holes 21 and 22 are not required. If the holes 22 are not provided, the score rules 44 may be suitably shaped, e.g., curved, etc., so as to form desired shapes of the sections 20a-20d. This may also simplify the construction of the die used to form the assemblies.

As with the other examples described above, the transaction card 10 and any of the portions 20a-20d of the auxiliary member 20 may include any type of printed information, such as advertisements, coupon or other purchase rebate information, a vendor name, and so on, or no information at all. Also, portions of the auxiliary member may be connected directly to the transaction card 10 or connected to the transaction card 10 through an intermediate member, such as the advertisement portion 20a. In short, the invention is not limited in the way that information is presented or the type of information presented on any portion of the transaction card assembly 1.

Fig. 8 shows a second side of the transaction card assembly 1 shown in Fig. 7. In this embodiment, the transaction card 10 includes machine-readable features such as a magnetic strip 13 and a barcode 15. As with the other examples described above, the magnetic strip 13 may be formed on the transaction card 10 in any suitable way, such as by a heat lamination or other suitable process. The transaction card 10, including the magnetic strip 13, the barcode 15 or other features may be made to meet current or future ISO specifications for transaction cards, such as credit cards.

The transaction card 10 and/or any portion 20a-20d of the auxiliary member 20 may also include one or more labels 14. The labels 14 may be removable or non-removable from the transaction card 10, and may (or may not) include indicia that match other indicia on the transaction card 10. For example, the label 14 may include an alphanumeric string that matches an alphanumeric string encoded in the barcode 15 and/or the magnetic strip 13. Indicia on the label 14, the magnetic strip 13 and/or the barcode 15 may be unique with respect to transaction card assemblies 1 in a set of assemblies 1. For example, each transaction card assembly 1 may include indicia, such as an account number, that is unique to that transaction card assembly 1. A plurality of transaction card assemblies 1 each having unique indicia may be included in a set of assemblies 1 that are used, for example, as part of a member transaction tracking system, e.g., a frequent flyer program or grocery store membership program. If the indicia on the label 14 matches indicia on the transaction card 10 (such as the indicia encoded in the barcode 15 and/or the magnetic strip 13), the label 14 may be removed from the transaction card 10 and kept when the transaction card 10 is placed into service. For example, as part of an issuee registration procedure, an issuee may complete a registration form including the issuee's name, address and other suitable information and place the label 14 containing the unique indicia on the registration form. Thus, the issuee or transaction card 10 issuer may be assured that the proper indicia, such as an account number, included on the label 14 and in the barcode 15 or magnetic strip 13 is included in the registration form. This can ensure that the proper issuee information is associated with the account number included in the transaction card 10.

As another example, the label 14 may include a personal identification number (PIN) that is personal to authorized users of the transaction card 10. Thus, an issuee of the transaction card 10 may remove the label 14 containing a PIN and attach the label 14 to a registration form or other document that is kept separate from the transaction card 10.

Although the label 14 is shown as attached to the transaction card 10, one or more labels 14 may be provided on the transaction card 10 and/or any portion 20a-20d of the auxiliary member 20. In addition, any portion 20a-20d of the auxiliary member 20 may include any suitable information such as a barcode 23 on the key tags 20c and 20d. The bar code 23 may match the bar code 15 or other indicia included on the transaction card 10, or may be different. Similarly, the key tags 20c and 20d (or other portions of the auxiliary member 20) may include one or more labels 14 that correspond to indicia included on the key tags 20c and 20d (or other portions 20a and 20b). As another example, a transaction card 10, a key tag 20c and a key tag 20d may each include different account numbers that are all related to each other so that activation of the assembly 1 activates all of the account numbers. These account numbers may be encoded, for example, in a barcode 15 or 23. The transaction card 10, the key card 20c and key card 20d may also include a label 14 that includes indicia, such as an alphanumerical string, that matches the indicia included in the barcode 15 or 23. Thus, when the account associated with the transaction card assembly 1 is placed into service, issuee information or other suitable information may be provided on a registration form and each of the labels 14 removed from the transaction card 10, and the key cards 20c and 20d and placed on the registration form. The labels 14 placed on the registration form may be placed so that they correspond with specific sets of issuee information on the registration form. For example, a first family member may be issued the transaction card 10 and the label 14 is placed on the registration form in association with the first member's information. A second member may be issued the key card 20c and a label 14 on the key card 20c may be placed on the registration form in association with the second member's information, and so on.

The embodiment shown in Figs. 7 and 8 is only one example of a transaction card assembly 1. It should be understood that various portions 20a-20d may be omitted, moved in position relative to other portions 20a-20d, and so on. For example, the advertisement portion 20a may be omitted and the coupon portion 20b and the key tag 20d may be connected directly to the transaction card 10 along the edge 11b. As another example, the coupon section 20b may be omitted and the key tags 20c and 20d made longer. Any of the portions 20a-20d may also include a machine-readable feature, such as a magnetic strip 13, barcode, electronic chip or other device, and so on.

In the embodiments described above, the magnetic strip 13 is placed near a long edge 11a opposite the auxiliary member 20. This placement allows the magnetic strip 13 to extend between the short edges 12a and 12b of the transaction card 10 and may allow easier encoding of the strip 13 while the auxiliary member 20 is connected to the transaction card 10. However, it should be understood that the magnetic strip 13 need not be arranged as shown in Figs. 2 and 8. Instead, two or more magnetic strips 13 may be included and/or a magnetic strip 13 may extend in any suitable direction along, or on any side of, the transaction card 10 and/or the auxiliary member 20. Alternately, the transaction card 10 and/or auxiliary member 20 may include a full magnetic back in which one entire surface of the card or member is covered with a magnetic material. Magnetic strips 13 or any other machine readable feature may be placed on the transaction card 10 and/or the auxiliary member 20 in a position such that the strip 13 or other feature can be read by a machine, such as a magnetic strip reader, without detaching the auxiliary member 20 from the transaction card 10.

In the transaction card assemblies described above, encoding of the magnetic strip 13, application of and/or printing of indicia on the label 14 and/or printing of the bar codes 15 and 23 and/or application of other information on the transaction card assembly 1 may be done while the transaction card assembly 1 is fully assembled. That is, a transaction card assembly 1 may be formed, e.g., stamped, from a single sheet of plastic either with or without the magnetic strip 13 being previously fixed to the transaction card 10. If the magnetic strip 13 has been previously attached to the sheet of plastic before stamping, the transaction card assembly 1 may be subjected to an encoding process that stores information, such as an account number, an account credit value, and so on, in the magnetic strip 13 before the transaction card assembly 1 is cut from the sheet. Of course, the magnetic strip 13 may be attached to the transaction card assembly 1, or the magnetic strip 13 may be encoded, after the assembly 1 is cut from the sheet. Thus, it is not necessary, although possible, to encode the magnetic strip 13 before the auxiliary member 20 is connected to the transaction card 10. Similarly, the labels 14 may be applied and/or printed and the barcodes 15 and 23, advertisements or other features may be applied to the transaction card assembly 1 while the transaction card 10 and the auxiliary member 20 are connected. This allows the transaction card assembly 1 to be completely formed and ready for use without requiring the separate manufacture of the transaction card 10 or any portions of the auxiliary member 20 before assembling the transaction card 10 and portions of the auxiliary member 20 together to form the transaction card assembly 1.

While the invention has been described in conjunction with specific embodiments thereof, it is evident that many alternatives, modifications, and variations will be apparent to those skilled in the art. Accordingly, embodiments of the invention as set forth herein are intended to be illustrative, not limiting. Various changes may be made without departing from the spirit and scope of the invention.

## Claims

1. A method for forming a transaction card assembly, comprising:
providing a sheet material having first and second planar surfaces; simultaneously scoring a portion of the sheet material on both of the first and second planar surfaces to form a score line; and
cutting a transaction card assembly from the sheet material, the transaction card assembly including first and second portions that are separable from each other by hand and without the use of tools at the score line by moving the first portion relative to the second portion.

2. The method of claim 1, wherein the step of simultaneously scoring comprises:
scoring portions on both of the first and second planar surfaces at locations directly opposite each other so that the score line is formed by two score marks opposite each other.

3. The method of claims 1 to 2, wherein the step of cutting comprises:
die cutting the transaction card assembly from the sheet material in a single cutting operation.

4. The method of claim 3, wherein the step of die cutting comprises:
aligning a cutting die appropriately with respect to the sheet material and a location of the score line.

5. The method of claim 4, wherein the step of die cutting comprises:
cutting the transaction card assembly from the sheet material so that the first portion forms a transaction card of a desired size bounded by at least one cut side of the first portion and a location where the score line is formed.

6. The method of claim 5, wherein the transaction card has a CR-80 format and has a size that meets ISO specifications for a CR-80 card when separated from the second portion of the sheet material at the score line.

7. The method of any one of claims 1 to 6, wherein the second portion of the transaction card assembly includes a transaction card, a coupon portion, an advertising portion, or a keytag.

8. The method of any one of claims 1 to 7, further comprising:
forming a machine readable feature on the first portion and/or the second portion.

9. The method of claim 8, wherein the machine readable feature includes a magnetic strip, barcode, electronic chip, RFID device, or a printed alphanumeric string.

10. The method of any one of claims 8 and 9, wherein the machine readable feature includes indicia that uniquely identifies the first or second portion from other transaction card assemblies in a plurality of transaction card assemblies provided for an issuer.

11. The method of any one of claims 1 to 10, wherein the score line is formed so that the first or second portion meets ISO specifications for edge roughness for transaction cards after being separated from each other.

12. The method of any one of claims 1 to 11, further comprising:
providing a removable label on the first or second portion.

13. The method of claim 12, wherein the label is a removable, reusable label, a scratch-off label, or a removable, non-reusable label.

14. The method of claim 12, wherein the label includes indicia that matches indicia on the first or second portion.

## Amended claims

### Amended claims in accordance with Rule 86(2) EPC.

**1.** A method for forming a transaction card assembly (1), comprising:
providing a sheet material (30) having first and second planar surfaces;
simultaneously scoring a portion of the sheet material (30) on both of the first and second planar surfaces to form a score line (2); and
cutting a transaction card assembly (1) from the sheet material, the transaction card assembly (1) including first (10) and second (20) portions that are separable from each other by hand and without the use of tools at the score line (2) by moving the first portion (10) relative to the second portion (20).

**2.** The method of claim 1, wherein the step of simultaneously scoring comprises:
scoring portions (42a) on both of the first and second planar surfaces at locations directly opposite each other so that the score line (2) is formed by two score marks (44) opposite each other.

**3.** The method of claims 1 to 2, wherein the step of cutting comprises:
die cutting the transaction card assembly (1) from the sheet material (30) in a single cutting operation.

**4.** The method of claim 3, wherein the step of die cutting comprises:
aligning a cutting die (40) appropriately with respect to the sheet material (30) and a location of the score line (44).

**5.** The method of claim 4, wherein the step of die cutting comprises:
cutting the transaction card assembly (1) from the sheet material (30) so that the first portion (10) forms a transaction card of a desired size defined by at least one cut side (lla; 12a; 12b) of the first portion (10) and a location where the score line (2) is formed.

**6.** The method of claim 5, wherein the transaction card has a CR-80 format and has a size that meets ISO specifications for a CR-80 card when separated from the second portion (20) of the sheet material (30) at the score line (2) .

**7.** The method of any one of claims 1 to 6, wherein the second portion (20) of the transaction card assembly (1) includes a transaction card, a coupon portion, an advertising portion, or a keytag.

**8.** The method of any one of claims 1 to 7, further comprising:
forming a machine readable feature on the first portion (10) and/or the second portion (20).

**9.** The method of claim 8, wherein the machine readable feature includes a magnetic strip (13), barcode, electronic chip, RFID device, or a printed alphanumeric string.

**10.** The method of any one of claims 8 and 9, wherein the machine readable feature includes indicia that uniquely identifies the first (10) or second (20) portion from other transaction card assemblies (1) in a plurality of transaction card assemblies (1) provided for an issuer.

**11.** The method of any one of claims 1 to 10, wherein the score line (2) is formed so that the first (10) and second (20) portion meets ISO specifications for edge roughness for transaction cards after being separated from each other.

**12.** The method of any one of claims 1 to 11, further comprising:
providing a removable label (14) on the first (10) or second (20) portion.

**13.** The method of claim 12, wherein the label (14) is a removable, reusable label, a scratch-off label, or a removable, non-reusable label.

**14.** The method of claim 12, wherein the label (14) includes indicia that matches indicia on the first (10) or second (20) portion.
